# EUROPEAN PATENT APPLICATION

(11) **EP 4 709 027 A1**
(43) Date of publication of application: **11.03.2026**
(21) Application number: 23935666.0
(22) Date of filing: 04.05.2023
(51) Int. Cl.: H04W 76/14

(54) **MAC ADDRESS ACQUISITION METHOD AND APPARATUS, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/092096
(87) International publication number: WO 2024/227293

(57) **Abstract**

Embodiments of the present disclosure relate to the technical field of communications, and provide an MAC address acquisition method and apparatus, a device, and a storage medium, applicable to a first AP. The method comprises : receiving an address resolution protocol (ARP) request frame sent by a station (STA), the ARP request frame being used for requesting to acquire an MAC address corresponding to a target **IP** address comprised in the ARP request frame; and sending the ARP request frame to a second AP. According to the embodiments of the present disclosure, when the STA performs handover between APs, the MAC address corresponding to the target IP address in the ARP request frame can be effectively acquired.

## Description

### TECHNICAL FIELD

The embodiments of the present disclosure relate to the field of communication technology. Specifically, the embodiments of the present disclosure relate to a method, an apparatus, a device, and a storage medium for acquiring an MAC address.

### BACKGROUND

With the continuous advancement of Wireless Fidelity (Wi-Fi) technology, researchers have proposed the next generation of Wi-Fi: Ultra High Reliability (UHR). Its vision is to improve WLAN connection reliability, reduce latency, increase manageability, and increase throughput, etc.

In the aforementioned UHR architecture, STAs can seamlessly roam between multiple APs. When a STA roams from AP1 to AP2, AP1 receives an Address Resolution Protocol (ARP) request frame from the STA over a certain link. This ARP request frame requests an MAC address corresponding to a target IP address. If AP1 cannot provide the MAC address corresponding to the target IP address to the STA, AP2 must provide the MAC address corresponding to the target IP address. However, the prior art cannot address this issue.

### SUMMARY

The embodiments of the present disclosure provide a method, an apparatus, a device, and a storage medium for acquiring an MAC address, enabling a STA to efficiently acquire the MAC address corresponding to a target IP address in an ARP request frame during handover between APs.

According to a first aspect of embodiments of the present disclosure, there is provided an MAC address acquisition method, which can be performed by a first AP, including:
receiving an Address Resolution Protocol ARP request frame sent by a station STA, the ARP request frame being configured to request to acquire an MAC address corresponding to a target IP address included in the ARP request frame; and
sending the ARP request frame to a second AP.

According to a second aspect of embodiments of the present disclosure, there is provided an MAC address acquisition method, which can be performed by a second AP, including:
receiving an ARP request frame sent by a first AP, the ARP request frame being configured to request to acquire an MAC address corresponding to a target IP address included in the ARP request frame, the ARP request frame being sent by a STA to the first AP.

According to a third aspect of embodiments of the present disclosure, there is provided an MAC address acquisition device, including:
a first communication unit, configured to receive an Address Resolution Protocol ARP request frame sent by a station STA, the ARP request frame being configured to request to acquire an MAC address corresponding to a target IP address included in the ARP request frame;
the first communication unit, configured to send the ARP request frame to a second AP.

According to a fourth aspect of embodiments of the present disclosure, there is provided an MAC address acquisition device, including:
a second communication unit, configured to receive an ARP request frame sent by a first AP, the ARP request frame being configured to request to acquire an MAC address corresponding to a target IP address included in the ARP request frame, and the ARP request frame being sent by a STA to the first AP.

According to a fifth aspect of embodiments of the present disclosure, there is provided an electronic device, including a memory, a processor, and a computer program stored on the memory and executable by the processor, where the processor, when executing the program, implements any one of MAC acquisition methods according to embodiments of the present disclosure.

Additional aspects and advantages of the embodiments of the present disclosure are partially described below and will become apparent from the description or through practice of the present disclosure.

### BRIEF DESCRIPTION OF THE DRAWINGS

To more clearly illustrate the technical solutions of the embodiments of the present disclosure, the following briefly introduces the figures used in describing the embodiments of the present disclosure. Obviously, the figures described below illustrate only some embodiments of the present disclosure. Those skilled in the art can derive other figures based on these figures without inventive effort.
FIG. 1 is a schematic diagram of the interaction between an AP MLD and a STA according to an embodiment of the present disclosure;
FIG. 2 is another schematic diagram of the interaction between an AP MLD and a STA according to an embodiment of the present disclosure;
FIG. 3 is a schematic diagram of a system architecture according to an embodiment of the present disclosure;
FIG. 4 is a schematic diagram of the interaction of an MAC address acquisition method according to an embodiment of the present disclosure;
FIG. 5a to FIG. 5c are other schematic diagrams of the interaction of an MAC address acquisition method according to an embodiment of the present disclosure;
FIG. 6 is a flowchart of an MAC address acquisition method according to an embodiment of the present disclosure;
FIG. 7 is another flowchart of an MAC address acquisition method according to an embodiment of the present disclosure;
FIG. 8 is a schematic diagram of a structure of an MAC address acquisition device according to an embodiment of the present disclosure;
FIG. 9 is another schematic diagram of a structure of an MAC address acquisition device according to an embodiment of the present disclosure;
FIG. 10 is a schematic diagram of a structure of an electronic device according to an embodiment of the present disclosure.

### DETAILED DESCRIPTION

In the embodiments of the present disclosure, the term "and/or" describes an association relationship between associated objects, indicating that three possible relationships exist. For example, "A and/or B" can mean: A exists alone, A and B exist simultaneously, or B exists alone. The character "/" generally indicates that the associated objects are in an "or" relationship.

In the embodiments of the present disclosure, the term "multiple" refers to two or more, and other quantifiers are similar.

Example embodiments will be described in detail herein, as illustrated in the accompanying drawings. Unless otherwise indicated, when the following description refers to the drawings, like numerals in different drawings represent the same or similar elements. The embodiments described in the following example embodiments do not represent all possible embodiments consistent with the present disclosure. Rather, they are merely examples of apparatuses and methods consistent with certain aspects of the present disclosure, as detailed in the appended claims.

The terminology used in the present disclosure is for the purpose of describing particular embodiments only and is not intended to be limiting. As used in the present disclosure and the appended claims, the singular forms "a", "an", and "the" are intended to include the plural forms, unless the context clearly indicates otherwise. It should also be understood that the term "and/or" as used herein refers to and encompasses any and all possible combinations of one or more of the associated listed items.

It should be understood that while the present disclosure may employ terms such as first, second, and third to describe various information, such information should not be limited to these terms. These terms are merely used to distinguish information of the same type from one another. For example, first information could be referred to as second information, and similarly, second information could be referred to as first information, without departing from the scope of the present disclosure. Depending on the context, for example, the term "if" as used herein could be interpreted as meaning "when", "upon" or "in response to a determining".

To improve system throughput (i.e., transmission rate), sufficient bandwidth must be provided for communication in the frequency spectrum above 45 GHz. For example, at least 1.08 GHz of bandwidth should be provided at 45 GHz, and at least 4.32 GHz (160 MHz, 320 MHz, etc.) or higher should be provided at 60 GHz for communication. Therefore, in UHR technology, device association can be achieved using at least sub-7 GHz spectrum. When a device requires high-speed communication (high throughput), simultaneous communication in sub-7 GHz and 45/60 GHz can be used. Furthermore, UHR technology will further enhance low-latency service transmission mechanisms. In existing applications, a STA (such as a mobile STA) often switches between two APs or AP MLDs. If the communication status of a STA with its associated AP changes, it can switch to another AP for communication, ensuring uninterrupted data flow.

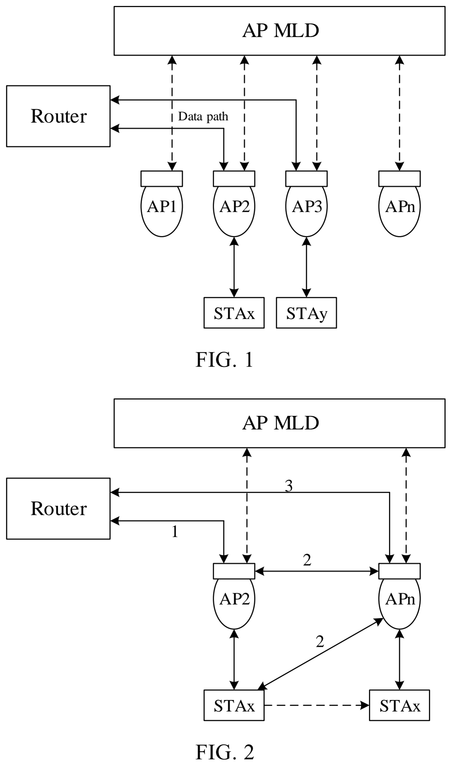

As shown in FIG. 1, an AP MLD is a logical entity that can be composed of multiple co-located APs (such as AP1, AP2, and AP3) and/or multiple non-co-located affiliated APs (APn). STAx is associated with AP2, and STAy is associated with AP3. AP2 can route data of STAx to a target device via a data path, and AP3 can route data of STA to a target device via a data path.

As shown in FIG. 2, during data transmission between STAx and the target device via AP2, AP2 can be switched to APn, and data can be routed to the target device for data transmission via APn, or APn can forward the data to AP2, and AP2 then routes the data to the target device.

In the existing Wi-Fi 7 (IEEE 802.11be) architecture, the AP can use the ARP protocol to provide the STA with the MAC address corresponding to the target IP address of the target device that the STA needs to communicate with. The AP can set the Proxy ARP field in the Extended Capabilities element to 1, in order to maintain a mapping between the hardware address and the Internet address (IPv4 and IPv6 addresses) for each associated STA and update the mapping when any address of the associated STA changes.

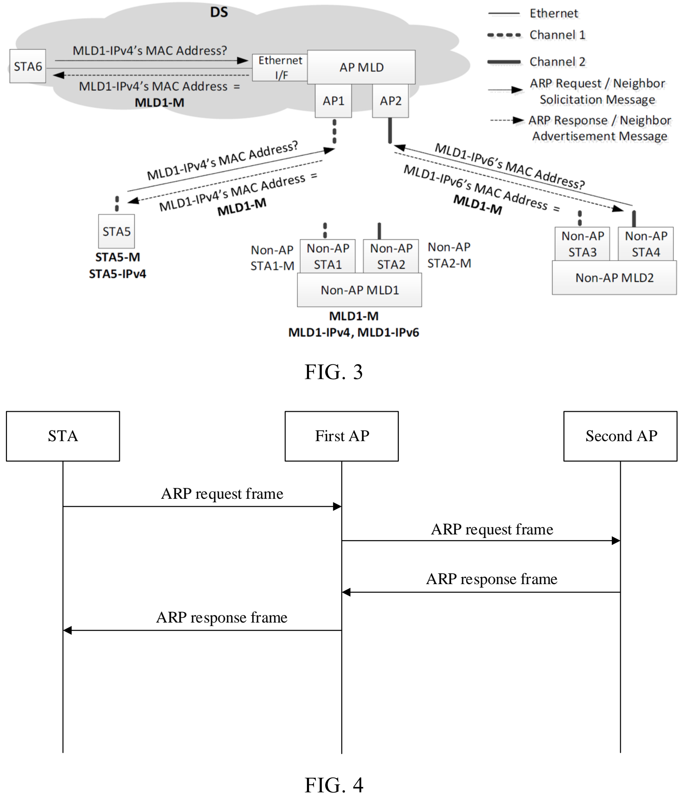

FIG. 3 shows the 802.11be architecture, which is described as follows:
AP MLD has two affiliated APs: AP1 operates on link 1 (channel 1) in the 5 GHz band, and AP2 operates on link 2 (channel 2) in the 6 GHz band. AP MLD, AP1, and AP2 are connected to the distribution system (DS), and the DS is connected to the LAN via a portal (e.g., an Ethernet interface).

Two non-AP MLDs (Non-AP MLD1 and Non-AP MLD2) are associated with AP MLD respectively, each with two affiliated STAs operating on link 1 and link 2, respectively.

The MAC address of Non-AP MLD1 is MLD1-M, and the IPv4 address MLD1-IPv4 and the IPv6 address MLD1-InPv6 are assigned to Non-AP MLD1.

STA5 is a STA not affiliated with the non-AP MLD and is associated with AP1. The MAC address of STA5 is STA5-M, and its IPv4 address is STA5-IPv4. STA6 is a device connected to AP-MLD through a distribution system. When AP-MLD receives an ARP request or a neighbor solicitation message from STA6 through the distribution system, with the target IP address set to MLD1-IPv4, the IPv4 address of Non-AP MLD1, the proxy ARP service in AP-MLD responds to STA6 with an ARP response or a neighbor advertisement message, with the MAC address of the sender set as MLD1-M.

When AP-MLD receives an ARP request from STA5 on link 1 with the target IP address being MLD1-IPv4, the proxy ARP service in AP-MLD responds to STA5 by an ARP response packet with the MAC address of the sender being MLD1-M.

When AP MLD receives a Neighbor Solicitation message from Non-AP MLD2 on Link 2 with the target IP address being IPv6 address of Non-AP MLD1, MLD1-IPv6, the proxy ARP service in AP MLD responds to Non-AP MLD2 by a Neighbor Advertisement message with the target link-layer address being MLD1-M.

When AP1 receives an ARP Request from Non-AP STA3 (not shown) associated with Non-AP MLD2 on Link 1, with the target IP address being IPv4 address of STA5, STA5-IPv4, the proxy ARP service in AP1 responds to Non-AP STA3 with an ARP Response packet, with the MAC address of the sender set as STA5-M.

However, if AP2 receives an ARP request with the target IP address being the IPv4 address of STA5 on Link 2 from Non-AP STA4 associated with Non-AP MLD2, the ARP request is forwarded to AP1 (e.g., via the distribution system), and the proxy ARP service in AP1 responds to Non-AP STA3 by an ARP response packet with the MAC address of the sender being STA5-M (e.g., via the distribution system and AP2).

In the above architecture, the STA (Non-AP MLD) can seamlessly roam between multiple APs (AP MLDs). When a STA (Non-AP MLD) roams from AP1 (AP MLD1) to AP2 (AP MLD2), AP1 (AP MLD1) may receive an ARP request frame on a particular link. If AP1 (AP MLD1) cannot provide the MAC address corresponding to the target IP address to the STA (Non-AP MLD), AP2 (AP MLD2) is required to provide it to the STA (Non-AP MLD). However, this is not specified in signaling of the existing standard.

To address the above-mentioned issues, the technical solutions in the embodiments of the present disclosure will be clearly and completely described below in conjunction with the accompanying drawings. Obviously, the described embodiments are only some of the embodiments of the present disclosure and do not constitute all of the embodiments. All other embodiments derived by those skilled in the art based on the embodiments of the present disclosure without inventive effort are within the scope of protection of the present disclosure.

The method and apparatus are based on the same concept of the present disclosure. Since the principles of the method and apparatus are similar, their implementations can be referenced to each other, and any repetitions will not be repeated.

See FIG. 3, which is a schematic diagram of a communication system structure provided by the embodiments of the present disclosure. The system architecture at least includes a first AP, a second AP, and a STA. When the STA switches from the first AP to the second AP, the STA can send an ARP request frame to the first AP. The ARP request frame is configured to request to acquire an MAC address corresponding to a target IP address included in the ARP. The target IP address is an IP address of a target device with which the STA wishes to transmit data.

When the target device is non-AP MLD, or when the target device only supports single-link operation and is not associated with AP MLD, the MAC address corresponding to the target IP address is the MAC address of the target device. For example, when the target device is non-AP MLD, the MAC address corresponding to the target IP address is the MAC address of the non-AP MLD. When the target device only supports single-link operation and is not associated with AP MLD, the MAC address corresponding to the target IP address is the MAC address of the target device.

When the target device only supports single-link operation and is associated with AP MLD, the MAC address corresponding to the target IP address is the link MAC address of the link on which target device is operating.

The first AP can forward the ARP request frame to the second AP.

The second AP can send an ARP response frame to the first AP. The ARP response frame indicates the MAC address corresponding to the target IP address, and the destination address of the ARP response frame is the MAC address corresponding to the STA. Based on this, after receiving the ARP response frame, the first AP can send the ARP response frame to the STA.

When the STA is a Non-AP MLD, or when the STA only supports single-link operation and is not associated with an AP MLD, the MAC address corresponding to the STA is the MAC address of the STA. When the target device only supports single-link operation and is associated with an AP MLD, the MAC address corresponding to the STA is the link MAC address of the link on which the STA is operating.

As shown in FIG. 4, in a case where the first AP and second AP are independent APs, when a STA roams from the first AP to the second AP, the STA can send an ARP request frame to the first AP, requesting an MAC address corresponding to a target IP address included in the ARP request frame. The first AP can forward the ARP request frame to the second AP, and the second AP responds with an ARP response frame to the first AP.

The ARP response frame includes the MAC address corresponding to the STA, so that after receiving the ARP response frame, the first AP forwards the ARP response frame to the STA.

The ARP response frame indicates the MAC address corresponding to the target IP address included in the ARP request frame.

When the first AP and the second AP are multi-link devices (MLDs), the first AP can receive the ARP request frame sent by the STA through the first affiliated AP operating on the first link.

If the target IP address is an IP address on the first link, the first AP can send the ARP request frame to the second AP through the first affiliated AP, or forward the ARP request frame internally to a fourth affiliated AP operating on the second link through the first affiliated AP, and finally send the ARP request frame to the second AP through the fourth affiliated AP. Specifically, the first AP can send the ARP request frame to the second affiliated AP, which is affiliated with the second AP and operating on the first link, through the first affiliated AP or the fourth affiliated AP, or send the ARP request frame to the third affiliated AP, which is affiliated with the second AP and operating on the second link, and the second AP forwards the ARP request frame internally to the second affiliated AP operating on the first link through the third affiliated AP.

If the target IP address is an IP address on the first link, the second AP ultimately receives the ARP request frame through a second affiliated AP operating on the first link and sends an ARP response frame to the first AP through the second affiliated AP. Alternatively, the second AP internally forwards the ARP response frame to a third affiliated AP operating on the second link through the second affiliated AP, and ultimately sends the ARP response frame to the first AP through the third affiliated AP. Specifically, the second AP may send the ARP response frame to the first affiliated AP, which is affiliated with the first AP and operating on the first link, through the second affiliated AP or the third affiliated AP, or forward the ARP response frame to a fourth affiliated AP, which is affiliated with the first AP and operating on the second link. The first AP then internally forwards the ARP response frame to the first affiliated AP operating on the first link through the fourth affiliated AP.

Finally, the first AP sends the ARP response frame to the STA through the first affiliated AP operating on the first link.

If the target IP address is an IP address on the first link, the second AP ultimately receives the ARP response frame and sends it through the second affiliated AP operating on the first link. The first AP ultimately receives the ARP response frame and sends it to the STA through the first affiliated AP operating on the first link.

If the target IP address is an IP address on the second link, the first AP can send an ARP request frame to the second AP via the first affiliated AP, or the first AP can internally forward the ARP request frame to a fourth affiliated AP operating on the second link through the first affiliated AP, and can finally send the ARP request frame to the second AP through the fourth affiliated AP. Specifically, the first AP can send an ARP request frame to a third affiliated AP, which is affiliated with the second AP and operating on the second link, through the first or fourth affiliated AP, or the first AP can send an ARP request frame to a second affiliated AP, which is affiliated with the second AP and operating on the first link, and can then forward the ARP request frame internally to the third affiliated AP operating on the second link through the second affiliated AP.

If the target IP address is an IP address on the second link, the second AP can receive an ARP request frame through a third affiliated AP operating on the second link and send an ARP response frame to the first AP through the third affiliated AP, or the second AP can internally forward the ARP response frame to a second affiliated AP operating on the first link through the third affiliated AP, and can finally send the ARP response frame to the first AP through the second affiliated AP. Specifically, the second AP can send the ARP response frame to a fourth affiliated AP, which is affiliated with the first AP and operating on the second link, through the second affiliated AP or the third affiliated AP, or the second AP can send the ARP response frame to a fourth affiliated AP, which is affiliated with the first AP and operating on the first link, and the first AP internally forwards the ARP response frame to the fourth affiliated AP operating on the second link through the first affiliated AP.

Finally, the first AP sends the ARP response frame to the STA through the fourth affiliated AP operating on the second link.

In the embodiments of the present disclosure, the STA can be a non-AP MLD.

As an example, AP1 and AP4 are affiliated with AP MLD1, and AP2 and AP3 are affiliated with AP MLD2. When the non-AP MLD switches from AP MLD1 to AP MLD2, the non-AP MLD can send an ARP request frame to AP MLD1, requesting the MAC address corresponding to the target IP address included in the ARP request frame. AP1 and AP2 are operating on the first link, and AP3 and AP4 are operating on the second link. AP MLD1 receives the ARP request frame sent by the non-AP MLD through AP1.

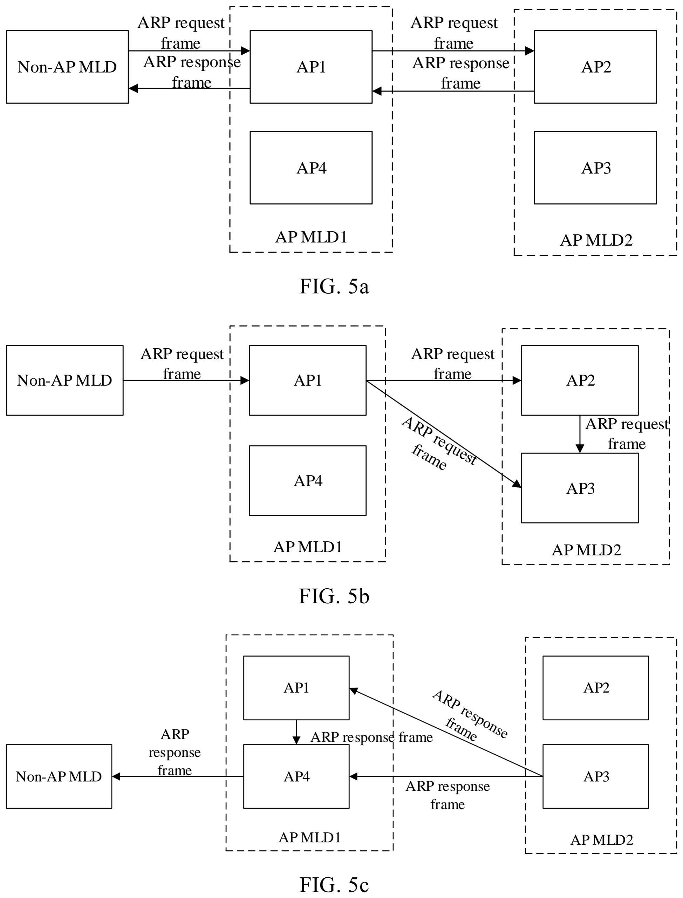

When the target IP address in the ARP request frame is an IP address on the first link, as shown in FIG. 5a, AP MLD1 can receive the ARP request frame through AP1 and send the ARP request frame to AP2. AP MLD2 can send an ARP response frame to AP1 through AP2. The ARP response frame includes the MAC address corresponding to the target IP address, and the destination address of the ARP response frame is the MAC address of the non-AP MLD. AP MLD1 receives the ARP response frame through AP1 and sends the ARP response frame to the non-AP MLD through AP2.

When the target IP address in the ARP request frame is an IP address on the second link, as shown in FIG. 5b, AP MLD1 can receive the ARP request frame through AP1 and send the ARP request frame to AP2 through AP1. AP2 then forwards the ARP request frame to AP3. Alternatively, AP MLD1 can send the ARP request frame directly to AP3 through AP1.

When the target IP address in the ARP request frame is an IP address on the second link, as shown in FIG. 5c, AP MLD2 can send an ARP response frame to AP1 through AP3, and then send the ARP response frame to AP4 through AP1. Alternatively, AP MLD2 can directly send the ARP response frame to AP4 through AP3. After AP MLD 1 receives the ARP response frame from AP4, AP MLD1 sends the ARP response frame to the non-AP MLD through AP4. The ARP response frame indicates the MAC address corresponding to the target IP address, and the destination address of the ARP response frame is the MAC address corresponding to the non-AP MLD. Based on this, after AP MLD1 receives the ARP response frame through AP4, AP MLD1 can send the ARP response frame to the non-AP MLD through AP4.

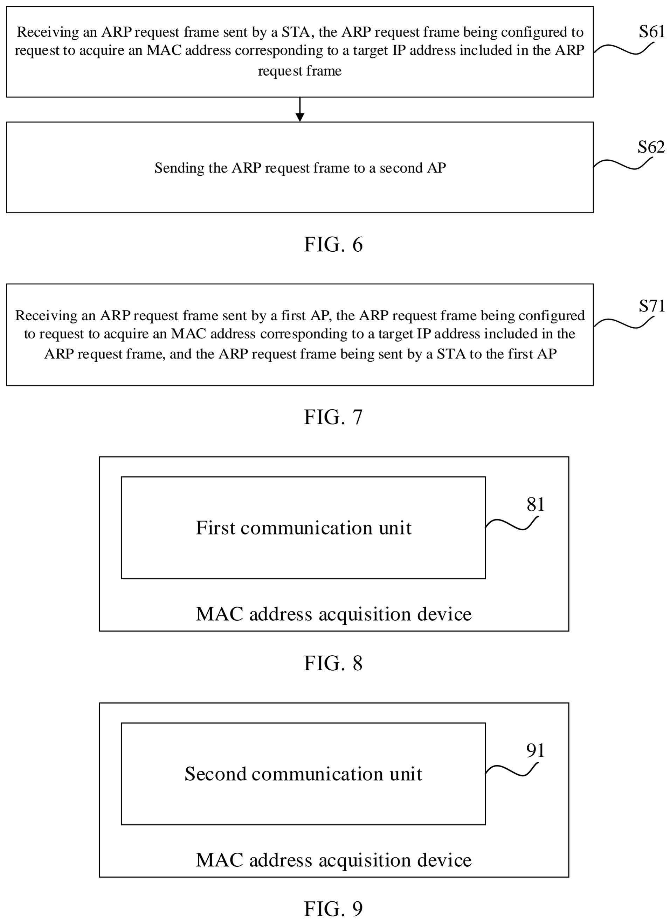

The embodiment of the present disclosure provides an MAC address acquisition method that can be applied to a first AP. For details, see FIG. 6, which is a flow chart of the MAC address acquisition method provided by the embodiment of the disclosure.

Alternatively, the method may include the following steps:
Step S61: receiving an ARP request frame sent by a STA. The ARP request frame is configured to request to acquire an MAC address corresponding to a target IP address included in the ARP request frame.

The target **IP** address included in the ARP request frame is an IP address of a target device with which the STA wishes to communicate. The target IP address can be either an IPv4 address or an IPv6 address, without limitation.

The STA can be an independent device not associated with any Non-AP MLD, or a Non-AP MLD, without limitation.

The first AP can be an independent AP or a Multi-Link Device (MLD), i.e., the first AP can be an AP MLD.

Step S62: sending an ARP request frame to a second AP.

If the first AP cannot provide the MAC address corresponding to the target IP address to the STA, the first AP forwards the ARP request frame to the second AP.

The second AP can be a standalone AP or a Multi-Link Device (MLD), i.e., the second AP can be an AP MLD.

The MAC address acquisition method for the first AP provided in the embodiment of the present disclosure further includes:
receiving an ARP response frame sent by the second AP, where the ARP response frame indicates the MAC address corresponding to the target IP address, and a destination address of the ARP response frame is the MAC address corresponding to the STA.

Furthermore, after receiving the ARP response frame, the first AP can send the ARP response frame to the STA based on the destination address of the ARP response frame.

In the MAC address acquisition method for the first AP provided in the embodiment of the present disclosure, the first AP and the second AP are multi-link devices (MLDs), and the first AP receives the ARP request frame through a first affiliated AP, which is affiliated with the first AP and operates on the first link.

When the first AP and the second AP are MLD APs, each of their affiliated APs can operate on multiple links at different frequencies, e.g., links at 2.4 GHz, 5 GHz, or 6 GHz, or several links at 2.4 GHz with the same or different bandwidths. That is, one affiliated AP of the first AP can operate on the same link as one affiliated AP of the second AP.

For ease of description, when the first AP is a multi-link device, the first AP receives the ARP request frame through an affiliated AP, and the link on which the affiliated AP (the first AP) is operating is referred to as the first link.

In the MAC address acquisition method for a first AP provided in an embodiment of the present disclosure, in a case where the first AP and the second AP are multi-link devices MLDs and the first AP receives an ARP request frame through a first affiliated AP operating on the first link, if the target IP address included in the ARP request frame is an IP address on the first link, the first AP sending the ARP request frame to the second AP includes:
sending the ARP request frame to a second affiliated AP through the first affiliated AP, where the second affiliated AP is affiliated with the second AP and operating on the first link.

That is, when the target IP address included in the ARP request frame is an IP address on the first link, the first AP sends an ARP request frame to the second affiliated AP, which is affiliated with the second AP and operating on the first link, through the first affiliated AP, in order to forward the ARP request frame to the second AP.

In the MAC address acquisition method for a first AP provided in an embodiment of the present disclosure, in a case where the first AP and the second AP are multi-link devices (MLDs), and the first AP receives the ARP request frame through the first affiliated AP operating on the first link, if the target IP address included in the ARP request frame is an IP address on a second link, the first AP sending the ARP request frame to the second AP includes:
sending the ARP request frame to the second affiliated AP through the first affiliated AP, so that the second affiliated AP sends the ARP request frame to a third affiliated AP.

The second and third affiliated APs are affiliated with the second AP, and the second affiliated AP operates on the first link, while the third affiliated AP operates on the second link.

That is, when the target IP address included in the ARP request frame is an IP address on the second link, the first AP sends the ARP request frame to the second affiliated AP, which is affiliated with the second AP and operating on the first link, through the first affiliated AP, so that the second affiliated AP operating on the first link forwards the ARP request frame to a third affiliated AP operating on the second link within the second AP.

Alternatively, when the target IP address included in the ARP request frame is an IP address on the second link, the first AP sending the ARP request frame to the second AP includes:
sending the ARP request frame to the third affiliated AP through the first affiliated AP.

The third affiliated AP is affiliated with the second AP and operating on the second link.

That is, when the target IP address included in the ARP request frame is an IP address on the second link, the first AP sends the ARP request frame directly to the third affiliated AP, which is affiliated with the second AP and operating on the second link, through the first affiliated AP.

In the MAC address acquisition method for a first AP provided in an embodiment of the present disclosure, in a case where the first AP and the second AP are multi-link devices (MLDs), and the first AP receives an ARP request frame through a first affiliated AP operating on a first link, when the target IP address included in the ARP request frame is an IP address on the first link, receiving the ARP response frame sent by the second AP includes:
receiving the ARP request frame sent by a second affiliated AP through the first affiliated AP.

The second AP is affiliated with the second AP and operates on the first link.

That is, after receiving the ARP request frame forwarded by the first AP, the second AP may send the ARP response frame to the first AP through the second affiliated AP operating on the first link, where the ARP response frame indicates the MAC address corresponding to the target IP address.

The destination address of the ARP response frame is the MAC address corresponding to the STA, so that after receiving the ARP response frame, the first AP may send the ARP response frame to the STA based on the destination address of the ARP response frame.

In the MAC address acquisition method for a first AP provided in an embodiment of the present disclosure, in a case where the first AP and the second AP are multi-link devices (MLDs), and the first AP receives an ARP request frame via a first affiliated AP operating on the first link, if the target IP address included in the ARP request frame is an IP address on the second link, receiving the ARP response frame sent by the second AP includes:
receiving the ARP response frame sent by a third affiliated AP through a first affiliated AP, and forwarding the ARP response frame to a fourth affiliated AP.

The first affiliated AP is affiliated with the first AP and operates on the first link, the third affiliated AP is affiliated with the second AP and operates on the second link, and the fourth affiliated AP is affiliated with the first AP and operates on the second link.

That is, after receiving the ARP request frame forwarded by the first AP, the second AP may send an ARP response frame to the first affiliated AP, which is affiliated with the first AP and operates on the first link, through the third affiliated AP operating on the second link, where the ARP response frame indicates the MAC address corresponding to the target IP address. After the first AP receives the ARP response frame through the first affiliated AP, the first AP can internally forward the ARP response frame to the fourth affiliated AP operating on the second link through the first affiliated AP, thereby ultimately receiving the ARP response frame.

Alternatively, when the target IP address included in the ARP request frame is an IP address on the second link, receiving the ARP response frame sent by the second AP includes:
receiving the ARP response frame sent by the third affiliated AP through a fourth affiliated AP.

The fourth affiliated AP is affiliated with the first AP and operates on the second link.

That is, after receiving the ARP request frame forwarded by the first AP, the second AP may directly send an ARP response frame, indicating the MAC address corresponding to the target IP address, to the fourth affiliated AP, which is affiliated with the first AP and operates on the second link, through the third affiliated AP operating on the second link.

The destination address of the ARP response frame is the MAC address corresponding to the STA, so that after receiving the ARP response frame, the first AP may send the ARP response frame to the STA based on the destination address of the ARP response frame.

In the MAC address acquisition method for a first AP provided in an embodiment of the present disclosure, in a case where the first AP and the second AP are multi-link devices (MLDs), and the first AP receives the ARP request frame through the first affiliated AP operating on the first link, sending the ARP response frame to the STA includes:
when the target IP address is an IP address on the first link, sending the ARP response frame to the STA through a first affiliated AP;
when the target IP address is an IP address on the second link, sending the ARP response frame to the STA via a third affiliated AP.

The first and third affiliated APs are affiliated with the first AP, and the third affiliated AP operates on the second link, while the first affiliated AP operates on the first link.

That is, when the first AP is a multi-link device (MLD), the first AP sends the ARP response frame to the STA through an affiliated AP operating on the link corresponding to the target IP address.

The ARP response frame indicates the MAC address corresponding to the target IP address, and the destination address of the ARP response frame is the MAC address corresponding to the STA.

The embodiment of the present disclosure provides a MAC address acquisition method that can be applied to a second AP. For details, see FIG. 7, which is another flowchart of the MAC address acquisition method provided in an embodiment of the present disclosure.

Alternatively, the method may include the following steps:
Step S71: receiving an ARP request frame sent by a first AP. The ARP request frame is configured to request to acquire an MAC address corresponding to a target IP address included in the ARP request frame. The ARP request frame is sent by a STA to the first AP.

The target IP address included in the ARP request frame is an IP address of the target device with which the STA wishes to communicate. The target IP address can be either an IPv7 address or an IPv6 address, without limitation.

The STA can be an independent device not associated with any Non-AP MLD, or a Non-AP MLD, without limitation.

The first AP can be an independent AP or a Multi-Link Device (MLD), i.e., the first AP can be an AP MLD.

The ARP request frame received by the second AP is forwarded to the second AP by the first AP when the first AP is unable to provide the STA with the MAC address corresponding to the target IP address.

The second AP can be an independent AP or a Multi-Link Device (MLD), i.e., the second AP can be an AP MLD.

The MAC address acquisition method for the second AP provided in the embodiments of the present disclosure further includes:
sending an ARP response frame to the first AP, the ARP response frame indicating the MAC address corresponding to the target IP address, and a destination address of the ARP response frame being the MAC address corresponding to the STA. After receiving the ARP response frame, the first AP can send the ARP response frame to the STA based on the destination address of the ARP response frame.

In the MAC address acquisition method for a second AP provided in an embodiment of the present disclosure, the first AP and the second AP are multi-link devices (MLDs), and the first AP receives the ARP request frame through a first affiliated AP. The first affiliated AP is affiliated with the first AP and operates on a first link.

When the first AP and the second AP are AP MLDs, each affiliated AP of the first AP and the second AP can operate on multiple links at different frequencies, such as links at 2.4 GHz, 5 GHz, and 6 GHz, or several links at 2.4 GHz with the same or different bandwidths. In other words, one affiliated AP of the first AP can operate on the same link as one affiliated AP of the second AP.

For ease of description, when the first AP is a multi-link device, the first AP receives the ARP request frame through an affiliated AP, and the link on which the affiliated AP (the first AP) is operating is referred to as the first link.

In the MAC address acquisition method for a second AP provided in an embodiment of the present disclosure, in a case where the first AP and the second AP are multi-link devices MLDs and the first AP receives an ARP request frame through a first affiliated AP operating on the first link, if the target IP address included in the ARP request frame is an IP address on the first link, receiving the ARP request frame sent by the first AP includes:
receiving the ARP request frame sent by the first affiliated AP through a second affiliated AP, where the second affiliated AP is affiliated with the second AP and operates on the first link.

That is, when the target IP address included in the ARP request frame is an IP address on the first link, the first AP sends the ARP request frame to the second affiliated AP, which is affiliated with the second AP and operating on the first link, through the first affiliated AP, in order to forward the ARP request frame to the second AP.

In the MAC address acquisition method for a second AP provided in an embodiment of the present disclosure, in a case where the first AP and the second AP are multi-link devices (MLDs), and the first AP receives the ARP request frame through the first affiliated AP operating on the first link, if the target IP address included in the ARP request frame is an IP address on a second link, receiving the ARP request frame sent by the first AP includes:
receiving the ARP request frame sent by the first affiliated AP through the second affiliated AP, and sending the ARP request frame to a third affiliated AP through the second affiliated AP.

The second affiliated AP and the third affiliated AP are affiliated with the second AP, and the second affiliated AP operates on the first link, while the third affiliated AP operates on the second link.

That is, when the target IP address included in the ARP request frame is an IP address on the second link, the first AP sends the ARP request frame to the second affiliated AP, which is affiliated with the second AP and operating on the first link, through the first affiliated AP, so that the second affiliated AP operating on the first link forwards the ARP request frame to a third affiliated AP operating on the second link within the second AP.

Alternatively, when the target IP address included in the ARP request frame is an IP address on the second link, receiving the ARP request frame sent by the first AP includes:
receiving the ARP request frame sent by the first affiliated AP through a third AP.

The third affiliated AP is affiliated with the second AP and operates on the second link.

That is, when the target IP address included in the ARP request frame is an IP address on the second link, the first AP sends the ARP request frame directly to the third affiliated AP, which is affiliated with the second AP and operating on the second link, through the first affiliated AP.

In the MAC address acquisition method for a second AP provided in an embodiment of the present disclosure, in a case where the first AP and the second AP are multi-link devices (MLDs), and the first AP receives the ARP request frame through a first affiliated AP operating on a first link, when the target IP address included in the ARP request frame is an IP address on the first link, sending the ARP response frame to the first AP includes:
sending the ARP request frame to the first affiliated AP through the second affiliated AP.

The second AP is affiliated with the second AP and operates on the first link.

That is, after receiving the ARP request frame forwarded by the first AP, the second AP can send the ARP response frame to the first AP through the second affiliated AP operating on the first link, where the ARP response frame indicates the MAC address corresponding to the target IP address.

The destination address of the ARP response frame is the MAC address corresponding to the STA, so that after receiving the ARP response frame, the first AP can send the ARP response frame to the STA based on the destination address of the ARP response frame.

In the MAC address acquisition method for a second AP provided in an embodiment of the present disclosure, in a case where the first AP and the second AP are multi-link devices (MLDs), and the first AP receives an ARP request frame via a first affiliated AP operating on the first link, if the target IP address included in the ARP request frame is an IP address on the second link, sending the ARP response frame to the first AP includes:
sending the ARP response frame to a first affiliated AP through a third affiliated AP, so that the first AP forwards the ARP response frame to the fourth affiliated AP through the first AP.

The first affiliated AP is affiliated with the first AP and operates on the first link, the third affiliated AP is affiliated with the second AP and operates on the second link, and the fourth affiliated AP is affiliated with the first AP and operates on the second link.

That is, after receiving the ARP request frame forwarded by the first AP, the second AP may send an ARP response frame to the first affiliated AP, which is affiliated with the first AP and operates on the first link, through the third affiliated AP operating on the second link, where the ARP response frame indicates the MAC address corresponding to the target IP address. After the first AP receives the ARP response frame through the first affiliated AP, the first AP can internally forward the ARP response frame to the fourth affiliated AP operating on the second link through the first affiliated AP, thereby ultimately receiving the ARP response frame.

Alternatively, when the target IP address included in the ARP request frame is an IP address on the second link, sending the ARP response frame to the first AP includes:
sending the ARP response frame to the fourth affiliated AP through the third affiliated AP.

The fourth affiliated AP is affiliated with the first AP and operates on the second link.

That is, after receiving the ARP request frame forwarded by the first AP, the second AP may directly send an ARP response frame, indicating the MAC address corresponding to the target IP address, to the fourth affiliated AP, which is affiliated with the first AP and operates on the second link, through the third affiliated AP operating on the second link.

The destination address of the ARP response frame is the MAC address corresponding to the STA, so that after receiving the ARP response frame, the first AP may send the ARP response frame to the STA based on the destination address of the ARP response frame.

It should be noted that in any embodiment of the present disclosure, the second AP (or its affiliated AP) determines the MAC address corresponding to the target IP address by the mapping between a hardware address and an Internet address, and the mapping is maintained by the second AP. Furthermore, in any embodiment of the present disclosure, the first link and the second link are different links.

Based on the MAC address acquisition method provided in the embodiments of the present disclosure, when a STA roams from a first AP to a second AP, upon receiving an ARP request frame sent by the STA, the first AP can forward the ARP request frame to the second AP and forward the ARP response frame sent by the second AP to the STA. The ARP response frame indicates the MAC address corresponding to the target IP address included in the ARP request frame, thereby enabling seamless roaming of the STA between APs.

As shown in FIG. 8, an embodiment of the present disclosure provides a MAC address acquisition device, including:
a first communication unit 81, configured to receive an Address Resolution Protocol (ARP) request frame sent by a station (STA), where the ARP request frame is configured to request to acquire an MAC address corresponding to a target IP address included in the ARP request frame.

The first communication unit 81 is configured to send the ARP request frame to a second AP.

Alternatively, in the embodiment of the present disclosure, the first communication unit 81 is further configured to:
receive an ARP response frame sent by the second AP, the ARP response frame indicating the MAC address corresponding to the target IP address, a destination address of the ARP response frame being the MAC address corresponding to the STA; and
send the ARP response frame to the STA.

Alternatively, in the embodiment of the present disclosure, the first AP and the second AP are multi-link devices (MLDs).

The first AP receives the ARP request frame through a first affiliated AP, and the first affiliated AP is affiliated with the first AP and operates on a first link.

Alternatively, in the embodiment of the present disclosure, if the target IP address is an IP address on the first link, the first communication unit 81 is further configured to:
send the ARP request frame to a second affiliated AP through the first affiliated AP.

The second affiliated AP is affiliated with the second AP and operates on the first link.

Alternatively, in the embodiment of the present disclosure, if the target IP address is an IP address on the second link, the first communication unit 81 is configured to:
send the ARP request frame to a second affiliated AP through the first affiliated AP, and send the ARP request frame to a third affiliated AP through the second affiliated AP; or
send the ARP request frame to a third affiliated AP through the first affiliated AP.

The second affiliated AP and the third affiliated AP are affiliated with the second AP, and the second affiliated AP and the third affiliated AP operate on the first link and the second link, respectively.

Alternatively, in the embodiment of the present disclosure, if the target IP address is an IP address on the first link, the first communication unit 81 is configured to:
receive the ARP response frame sent by a second affiliated AP via the first affiliated AP;
where the second affiliated AP is affiliated with the second AP and operates on the first link.

Alternatively, in an embodiment of the present disclosure, if the target IP address is an IP address on the second link, the first communication unit 81 is configured to:
receive the ARP response frame sent by a third affiliated AP through the first affiliated AP, and forward the ARP response frame to a fourth affiliated AP through the first affiliated AP; or
receive the ARP response frame sent by a third affiliated AP through a fourth affiliated AP.

The third affiliated AP and the fourth affiliated AP are respectively affiliated with the second AP and the first AP, and the third affiliated AP and the fourth affiliated AP operate on the second link.

Alternatively, in an embodiment of the present disclosure, the first communication unit 81 is configured to:
if the target IP address is an IP address on the first link, send the ARP response frame to the STA through the first affiliated AP;
if the target IP address is an IP address on the second link, send the ARP response frame to the STA through the third affiliated AP;
where the third affiliated AP is affiliated with the first AP, and the third affiliated AP operates on the second link.

As shown in FIG. 9, an embodiment of the present disclosure provides a MAC address acquisition device, including:
a second communication unit 91, configured to receive an ARP request frame sent by a first AP. The ARP request frame is configured to request to acquire an MAC address corresponding to a target IP address included in the ARP request frame. The ARP request frame is sent by a STA to the first AP.

Alternatively, in the embodiment of the present disclosure, the second communication unit 91 is further configured to:
send an ARP response frame to the first AP. The ARP response frame indicates the MAC address corresponding to the target IP address. A destination address of the ARP response frame is the MAC address corresponding to the STA.

Alternatively, in the embodiment of the present disclosure, the first AP and the second AP are multi-link devices (MLDs).

The ARP request frame is received by the first AP through a first affiliated AP, which is affiliated with the first AP and operates on a first link.

Alternatively, in an embodiment of the present disclosure, if the target IP address is an IP address on the first link, the second communication unit 91 is configured to:
receive the ARP request frame sent by the first affiliated AP through a second affiliated AP;
where the second affiliated AP is affiliated with the second AP and operates on the first link.

Alternatively, in an embodiment of the present disclosure, if the target IP address is an IP address on the second link, the second communication unit 91 is configured to:
receive the ARP request frame sent by the first affiliated AP through a second affiliated AP, and send the ARP request frame to a third affiliated AP through the second affiliated AP; or
receive the ARP request frame sent by the first affiliated AP through the third affiliated AP;
where the second affiliated AP and the third affiliated AP are affiliated with the second AP, and the second affiliated AP and the third affiliated AP operate on the first link and the second link, respectively.

Alternatively, in an embodiment of the present disclosure, if the target IP address is an IP address on the first link, the second communication unit 91 is configured to:
send an ARP response frame to the first affiliated AP through a second affiliated AP;
where the second AP is affiliated with the second AP and operates on the first link.

Alternatively, in an embodiment of the present disclosure, if the target IP address is an IP address under the second link, the second communication unit 91 is configured to:
send an ARP response frame to the first affiliated AP through a third affiliated AP, so that the first affiliated AP forwards the ARP response frame to a fourth affiliated AP; or
send an ARP response frame to a fourth affiliated AP through a third affiliated AP;
where the third affiliated AP and the fourth affiliated AP are affiliated with the second AP and the first AP, respectively, and the third affiliated AP and the fourth affiliated AP operate on the second link.

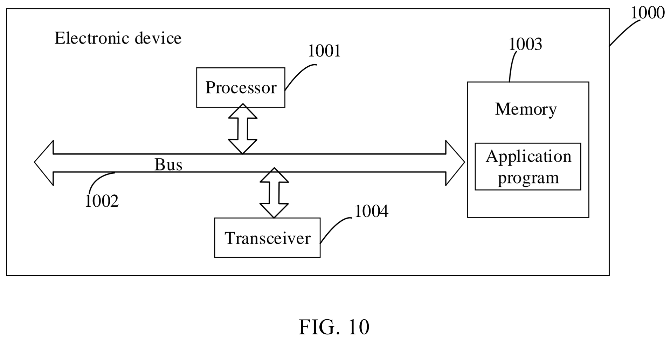

An embodiment of the present disclosure also provides an electronic device, as shown in FIG. 10. The electronic device 1000 shown in FIG. 10 includes a processor 1001 and a memory 1003. The processor 1001 and the memory 1003 are connected, for example, via a bus 1002. Alternatively, the electronic device 1000 may further include a transceiver 1004. It should be noted that in actual applications, the number of transceivers 1004 is not limited to one, and the structure of the electronic device 1000 does not constitute a limitation of the embodiment of the present disclosure.

The memory 1003 is configured to store application code for executing the embodiments of the present disclosure, and is controlled by the processor 1001 for execution. When the electronic device 1000 functions as a first AP, the processor 1001 is configured to execute the application code stored in the memory 1003 to implement the MAC address acquisition method for the first AP provided in the embodiments of the present disclosure. When electronic device 1000 functions as a second AP, the processor 1001 is configured to execute the application code stored in the memory 1003 to implement the MAC address acquisition method for the second AP provided in the embodiments of the present disclosure.

The bus 1002 may include a path for transmitting information between the aforementioned components. The bus 1002 may be a PCI (Peripheral Component Interconnect) bus or an EISA (Extended Industry Standard Architecture) bus, for example. The bus 1002 may be classified into an address bus, a data bus, a control bus, and so on. For ease of illustration, FIG. 10 shows only one thick line, but this does not indicate that there is only one bus or only one type of bus.

The memory 1003 may be, but is not limited to, a read-only memory (ROM) or other type of static storage device capable of storing static information and instructions, a random access memory (RAM) or other type of dynamic storage device capable of storing information and instructions, an electrically erasable programmable read-only memory (EEPROM), a compact disc read-only memory (CD-ROM) or other optical disk storage, an optical disc storage (including compact discs, laser discs, optical discs, digital versatile discs, Blu-ray discs, etc.), a magnetic disk storage medium or other magnetic storage device, or any other medium capable of carrying or storing desired program code in the form of instructions or data structures and accessible by a computer, but is not limited thereto.

The present disclosure provides a computer-readable storage medium having a computer program stored thereon. When executed on a computer, the computer can execute the corresponding contents of the aforementioned method embodiments.

It should be understood that although the steps in the flowcharts of the accompanying drawings are shown sequentially as indicated by the arrows, these steps are not necessarily executed in the order indicated by the arrows. Unless otherwise specified herein, the execution of these steps is not strictly limited to a specific order and may be performed in other orders. Furthermore, at least some of the steps in the flowcharts of the accompanying drawings may include multiple sub-steps or multiple stages, and these sub-steps or stages are not necessarily executed at the same time, but may be executed at different time. Their execution order is not necessarily sequential, but may be executed in rotation or alternation with other steps or at least a portion of their sub-steps or stages.

It should be noted that the computer-readable storage medium described above in the present disclosure may be a computer-readable signal medium or a computer-readable storage medium, or any combination thereof. A computer-readable storage medium may be, for example, but not limited to, an electrical, magnetic, optical, electromagnetic, infrared, or semiconductor system, apparatus, or device, or any combination thereof. More specific examples of computer-readable storage media may include, but are not limited to, an electrical connection having one or more conductors, a portable computer disk, a hard disk, random access memory (RAM), read-only memory (ROM), erasable programmable read-only memory (EPROM or flash memory), optical fiber, a portable compact disk read-only memory (CD-ROM), an optical storage device, a magnetic storage device, or any suitable combination thereof. In the present disclosure, a computer-readable storage medium may be any tangible medium containing or storing a program that can be used by or in conjunction with an instruction execution system, apparatus, or device. In the present disclosure, a computer-readable signal medium may include a data signal propagated in baseband or as part of a carrier wave, carrying computer-readable program code. Such a propagated data signal may take a variety of forms, including, but not limited to, electromagnetic signals, optical signals, or any suitable combination thereof. A computer-readable signal medium may also be any computer-readable storage medium other than a computer-readable storage medium, which can transmit, propagate, or transfer a program for use by or in conjunction with an instruction execution system, apparatus, or device. The program code contained on the computer-readable storage medium may be transmitted using any suitable medium, including but not limited to wires, optical cables, RF (radio frequency), or any suitable combination thereof.

The computer-readable storage medium may be included in the first or second AP, or may exist independently and not incorporated into the first or second AP.

The computer-readable storage medium carries one or more programs that, when executed by the first or second AP, cause the first or second AP to perform a corresponding MAC address acquisition method.

According to one aspect of the present disclosure, a computer program product or program is provided. The computer program product or program includes computer instructions stored in a computer-readable storage medium. A processor of a computer device reads the computer instructions from the computer-readable storage medium and executes the computer instructions, causing the computer device to perform the MAC address acquisition method provided in the various optional implementations described above.

Computer program code for performing the operations of the present disclosure can be written in one or more programming languages, or a combination thereof, including object-oriented programming languages such as Java, Smalltalk, and C++, as well as conventional procedural programming languages such as "C" or similar programming languages. The program code can execute entirely on the user's computer, partially on the user's computer, as a standalone software package, partially on the user's computer and partially on a remote computer, or entirely on a remote computer or server. In the case of a remote computer, the remote computer can be connected to the user's computer via any type of network, including a local area network (LAN) or a wide area network (WAN), or can be connected to an external computer (e.g., via the Internet using an Internet service provider).

The flowcharts and block diagrams in the accompanying drawings illustrate possible implementations of the architecture, functionality, and operation of systems, methods, and computer program products according to various embodiments of the present disclosure. In this regard, each block in the flowchart or block diagram may represent a module, program segment, or portion of code, which contains one or more executable instructions for implementing the specified logical function. It should also be noted that in some alternative implementations, the functions marked in the blocks may occur in a different order than that marked in the accompanying figures. For example, two blocks shown in succession may actually be executed substantially in parallel, or they may be executed in the opposite order, depending on the functions involved. It should also be noted that each block in the block diagrams and/or flowcharts, as well as combinations of blocks in the block diagrams and/or flowcharts, may be implemented using a dedicated hardware-based system that performs the specified functions or operations, or may be implemented using a combination of dedicated hardware and computer instructions.

The modules described in the embodiments of the present disclosure may be implemented in software or hardware. The names of modules do not necessarily limit the modules themselves. For example, module A may also be described as "module A for performing operation B."

The above description is merely a preferred embodiment of the present disclosure and an illustration of the underlying technical principles. Those skilled in the art should understand that the scope of the present disclosure is not limited to technical solutions formed by a specific combination of the above-mentioned technical features, but also encompasses other technical solutions formed by any combination of the above-mentioned technical features or their equivalents without departing from the scope of the above disclosure. For example, the above features may be replaced with (but not limited to) technical features with similar functions disclosed in the present disclosure to form a technical solution.

## Claims

1. An MAC address acquisition method, performed by a first access point device AP, comprising:
receiving an address resolution protocol ARP request frame sent by a station device STA, the ARP request frame being configured to request to acquire an MAC address corresponding to a target IP address comprised in the ARP request frame; and
sending the ARP request frame to a second AP.

2. The method according to claim 1, further comprising:
receiving an ARP response frame sent by the second AP, the ARP response frame being configured to indicate the MAC address corresponding to the target IP address, a destination address of the ARP response frame being an MAC address corresponding to the STA; and
sending the ARP response frame to the STA.

3. The method according to claim 1 or 2, wherein the first AP and the second AP are multi-link devices MLDs;
wherein the first AP receives the ARP request frame through a first affiliated AP, and the first affiliated AP is affiliated with the first AP and operates on a first link.

4. The method according to claim 3, wherein when the target IP address is an IP address on the first link, sending the ARP request frame to the second AP comprises:
sending the ARP request frame to a second affiliated AP through the first affiliated AP,
wherein the second AP is affiliated with the second AP and operates on the first link.

5. The method according to claim 3, wherein when the target IP address is an IP address on a second link, sending the ARP request frame to the second AP comprises:
sending the ARP request frame to a second affiliated AP through the first affiliated AP, wherein the ARP request frame is sent to a third affiliated AP through the second affiliated AP; or
sending the ARP request frame to the third affiliated AP through the first affiliated AP;
wherein the second affiliated AP and the third affiliated AP are affiliated with the second AP, and the second affiliated AP and the third affiliated AP operate on the first link and the second link, respectively.

6. The method according to claim 3, wherein when the target IP address is an IP address on the first link, receiving the ARP response frame sent by the second AP comprises:
receiving the ARP response frame sent by a second affiliated AP through the first affiliated AP,
wherein the second AP is affiliated with the second AP and operates on the first link.

7. The method according to claim 3, wherein when the target IP address is an IP address on a second link, receiving the ARP response frame sent by the second AP comprises:
receiving the ARP response frame sent by a third affiliated AP through the first affiliated AP, and forwarding the ARP response frame to a fourth affiliated AP through the first affiliated AP; or
receiving the ARP response frame sent by the third affiliated AP through a fourth affiliated AP,
wherein the third affiliated AP and the fourth affiliated AP are affiliated with the second AP and the first AP, respectively, and the third affiliated AP and the fourth affiliated AP operate on the second link.

8. The method according to claim 3, wherein sending the ARP response frame to the STA comprises:
when the target IP address is an IP address on the first link, sending the ARP response frame to the STA through the first affiliated AP; and
when the target IP address is an IP address on a second link, sending the ARP response frame to the STA through a third affiliated AP,
wherein the third affiliated AP is affiliated with the first AP and operates on the second link.

9. An MAC address acquisition method, performed by a second AP, comprising:
receiving an ARP request frame sent by a first AP, the ARP request frame being configured to request to acquire an MAC address corresponding to a target IP address comprised in the ARP request frame, the ARP request frame being sent by a STA to the first AP.

10. The method according to claim 9, further comprising:
sending an ARP response frame to the first AP, the ARP response frame being configured to indicate the MAC address corresponding to the target IP address, a destination address of the ARP response frame being an MAC address corresponding to the STA.

11. The method according to claim 9 or 10, wherein the first AP and the second AP are multi-link devices MLDs; and
the ARP request frame is received by the first AP through a first affiliated AP, and the first affiliated AP is affiliated with the first AP and operates on a first link.

12. The method according to claim 11, wherein when the target IP address is an IP address on the first link, receiving the ARP request frame sent by the first AP comprises:
receiving the ARP request frame sent by the first affiliated AP through a second affiliated AP,
wherein the second AP is affiliated with the second AP and operates on the first link.

13. The method according to claim 11, wherein when the target IP address is an IP address on a second link, receiving the ARP request frame sent by the first AP comprises:
receiving the ARP request frame sent by the first affiliated AP through a second affiliated AP, and sending the ARP request frame to a third affiliated AP through the second affiliated AP; or
receiving the ARP request frame sent by the first affiliated AP through the third affiliated AP,
wherein the second affiliated AP and the third affiliated AP are affiliated with the second AP, and the second affiliated AP and the third affiliated AP operate on the first link and the second link, respectively.

14. The method according to claim 11, wherein when the target IP address is an IP address on the first link, sending the ARP response frame to the first AP comprises:
sending the ARP response frame to the first affiliated AP through a second affiliated AP;
wherein the second AP is affiliated with the second AP and operates on the first link.

15. The method according to claim 11, wherein when the target IP address is an IP address on a second link, sending the ARP response frame to the first AP comprises:
sending the ARP response frame to the first affiliated AP through a third affiliated AP, wherein the ARP response frame is forwarded to a fourth affiliated AP through the first affiliated AP; or
sending the ARP response frame to the fourth affiliated AP through the third affiliated AP;
wherein the third affiliated AP and the fourth affiliated AP are respectively affiliated with the second AP and the first AP, and the third affiliated AP and the fourth affiliated AP operate on the second link.

16. An MAC address acquisition device, comprising:
a first communication unit, configured to receive an Address Resolution Protocol ARP request frame sent by a station STA, the ARP request frame being configured to request to acquire an MAC address corresponding to a target IP address comprised in the ARP request frame;
the first communication unit, configured to send the ARP request frame to a second AP.

17. An MAC address acquisition device, comprising:
a second communication unit, configured to receive an ARP request frame sent by a first AP, the ARP request frame being configured to request to acquire an MAC address corresponding to a target IP address comprised in the ARP request frame, and the ARP request frame being sent by a STA to the first AP.

18. An electronic device, comprising a memory, a processor, and a computer program stored on the memory and executable by the processor, wherein the processor, when executing the program, implements the method according to any one of claims 1 to 15.

19. A computer-readable storage medium, wherein a computer program is stored on the computer-readable storage medium, and the computer program, when executed by a processor, implements the method according to any one of claims 1 to 15.
